(19) Europäisches Patentamt / European Patent Office / Office européen des brevets

(11) **EP 4 183 284 B1**

(12) **EUROPÄISCHE PATENTSCHRIFT**

(45) Veröffentlichungstag und Bekanntmachung des Hinweises auf die Patenterteilung:
**22.07.2026 Patentblatt 2026/30**

(21) Anmeldenummer: **22207670.5**

(22) Anmeldetag: **16.11.2022**

(51) Internationale Patentklassifikation (IPC):
**A41D 31/06** (2019.01)

(52) Gemeinsame Patentklassifikation (CPC):
**A41D 31/065**

(54) **BEKLEIDUNGSSTÜCK MIT EINER WÄRMEISOLATIONSSTRUKTUR**

GARMENT WITH A THERMAL INSULATION STRUCTURE

VÊTEMENT AVEC STRUCTURE D'ISOLATION THERMIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.11.2021 DE 102021005754**

(43) Veröffentlichungstag der Anmeldung:
**24.05.2023 Patentblatt 2023/21**

(73) Patentinhaber: **adidas AG**
**91074 Herzogenaurach (DE)**

(72) Erfinder:
• HAMMER, Barbara Ruth
91074 Herzogenaurach (DE)
• ZHU, Jiabei
91074 Herzogenaurach (DE)

(74) Vertreter: **Bardehle Pagenberg Partnerschaft mbB**
**Patentanwälte Rechtsanwälte**
**Prinzregentenplatz 7**
**81675 München (DE)**

(56) Entgegenhaltungen:
**DE-A1- 102014 200 824    US-A- 5 713 079**

**Beschreibung**

Die vorliegende Erfindung betrifft ein Bekleidungsstück mit einer Wärmeisolationsstruktur, wobei das Bekleidungsstück insbesondere für den Einsatz im Outdoor-Bereich konzipiert ist.

Eine Hauptaufgabe von Bekleidung, insbesondere im Outdoorbereich, besteht darin, den Körper eines Trägers eines solchen Bekleidungsstücks von der Umgebung thermisch zu isolieren und einen Wärmeverlust zu minimieren. Hierzu wird typischerweise ein Aufbau gewählt, bei dem ein gut wärmeisolierendes Material zwischen einer Außenschicht und einer Innenschicht eingebettet wird, um so den Isolationseffekt zu bewirken. Hierbei kommen sowohl natürliche Isolationsmaterialien, insbesondere Daunen, als auch synthetische Materialien zum Einsatz.

Um ein ungewolltes Verrutschen bzw. Umverteilen des Isolationsmaterials zu vermeiden, wird das Isolationsmaterial dabei typischerweise auf einzelnen Kammern oder Abteile verteilt, wie aus DE102014200824 A1 bekannten Kammerbauweise. Aus dem Stand der Technik ist fernerhin eine Bauweise bekannt, bei der die Außen- und Innenschicht des Bekleidungsstücks direkt miteinander vernäht oder versteppt werden und hierdurch einzelne Kammern geschaffen werden, welche mit Isolationsmaterial befüllt sind. Die Naht-Bauweise kann es jedoch Wärme erlauben, durch die Naht zu entweichen, oder sie kann alternativ ein Eindringen von kalter Luft in das Bekleidungsstück erlauben. Weiterhin ist es jedoch ein Nachteil dieser Bauweise, dass im Bereich der Nähte, in denen die Außenschicht und Innenschicht direkt in Kontakt stehen, kein Isolationsmaterial vorhanden ist. Hierdurch findet im Bereich der Nähte ein erheblicher Wärmeverlust statt. Durch die in DE102014200824 A1 veröffentlichte technische Lehre kann der Wärmeverlust über die Nähte reduziert werden.

US 5 713 079 A betrifft ein isoliertes Kleidungsstück, das einen Außenstoff und einen Innenstoff und mindestens zwei Isolierschichten zwischen dem Innen- und dem Außenstoff aufweist. Eine erste Isolationsschicht, die an das Außengewebe angrenzt, ist ein synthetisches Material und eine zweite Isolationsschicht, die an das Innengewebe angrenzt, ist Gänsedaune. Die Nähte, die das Innen- und das Außengewebe an den beiden Isolierschichten halten, sind so angeordnet, dass die Nähte einer der Isolierschichten an die Mittelpunkte zwischen den Nähten der zweiten Isolierschicht angrenzen.

Es ist daher eine Aufgabe der vorliegenden Erfindung, eine Wärmeisolationsstruktur bereitzustellen, welche den Wärmeverlust weiter minimiert. Die Aufgabe wird gelöst durch den Gegenstand des Anspruchs 1. Vorteilhafte Ausführungsformen sind Gegenstand der Unteransprüche, der Figuren sowie der folgenden Beschreibung.

Die vorliegende Erfindung stellt eine Wärmeisolationsstruktur für ein Bekleidungsstück bereit. Die Wärmeisolationsstruktur zeichnet ich insbesondere dadurch aus, dass ein Wärmeverlust im Bereich möglicher Nähte minimiert oder zumindest verringert wird. In einer Ausführungsform ermöglicht die Wärmeisolationsstruktur dabei den Einschluss eines zusätzlichen Luftvolumens, das die Funktion eines thermischen Widerstands nach außen erfüllt, insbesondere ohne zwischenangeordnete Unterbrechungen. In diesem Sinne wird gemäß einem Aspekt der Erfindung ein Bekleidungsstück mit einer erfindungsgemäßen Wärmeisolationsstruktur bereitgestellt. Das erfindungsgemäße Bekleidungsstück kann dabei ausgeführt sein als Jacke oder Mantel, als Weste oder als Hose in jeweils beliebiger Form. Die Wärmeisolationsstruktur weist ein erstes Isolationselement mit einer ersten Isolationsschicht, ein zweites mit einer zweiten Isolationsschicht und ein drittes Isolationselement mit einer dritten Isolationsschicht auf, wobei das zweite Isolationselement eine andere Ausgangsform aufweist als das erste (und dritte) Isolationselement, wobei das erste Isolationselement mit dem zweiten Isolationselement verbunden ist und wobei das zweite Isolationselement beim Tragen des Bekleidungsstücks durch einen Druck auf eine Innenseite der Wärmeisolationsstruktur so verformt wird, dass eine Kontaktfläche, in der das erste Isolationselement das zweite Isolationselement berührt, vergrößert wird.

Die Ausgangsform bezieht sich vorzugsweise auf eine Form des ersten und zweiten Isolationselements, wenn kein Druck auf die Innenseite der Wärmeisolationsstruktur ausgeübt wird. Weiterhin bezieht sich die Form vorzugsweise auf eine Querschnittsform des ersten und zweiten Isolationselements. Der Ausdruck "andere Ausgangsform" kann ferner auch die Ausrichtung des ersten und zweiten Isolationselements berücksichtigen. Das heißt, das erste und zweite Isolationselement können beide dieselbe oder eine ähnliche (Querschnitts-)Gestalt haben, z. B. können beide eine ovale Gestalt haben, aber sie können unterschiedlich ausgerichtet sein. Beispielsweise kann das erste Isolationselement einen Oblaten Querschnitt haben und das zweite Isolationselement kann einen prolaten Querschnitt haben. Solche Ausführungsformen mit einer gleichen Gestalt aber unterschiedlichen Ausrichtungen des ersten und zweiten Isolationselements werden durch den Ausdruck "andere Ausgangsform" ebenfalls mit abgedeckt.

Vorzugsweise weist die Wärmeisolationsstruktur eine Mehrzahl von ersten Isolationselementen und eine Mehrzahl von zweiten Isolationselementen auf, wobei die zweiten Isolationselemente jeweils eine andere Ausgangsform als die ersten Isolationselemente aufweisen, wobei jedes erste Isolationselement mit zumindest einem zweiten Isolationselement verbunden ist und wobei die zweiten Isolationselemente beim Tragen des Bekleidungsstücks durch einen Druck auf die Innenseite der Wärmeisolationsstruktur so verformt werden, dass Kontaktflächen, in denen die ersten Isolationselemente die zweiten Isolationselemente berühren, vergrößert werden.

Vorzugsweise wird die Kontaktfläche zwischen jedem ersten Isolationselement und dem jeweiligen zweiten Isolationselement bzw. den Isolationselementen, mit denen es verbunden ist, vergrößert, wenn das Bekleidungsstück getragen wird. Es ist jedoch auch möglich, dass Kontaktflächen nur zwischen einigen der ersten und zweiten Isolationselemente vergrößert werden.

Wenn das erfindungsgemäße Bekleidungsstück von einem Träger getragen wird, sind das erste und das zweite Isolationselement mit der ersten und zweiten Isolationsschicht untereinander angeordnet, während das dritte Isolationselement mit der dritten Isolationsschicht neben dem ersten und dem zweiten Isolationselement angeordnet ist.

Die erfindungsgemäße Wärmeisolationsstruktur kombiniert die Vorteile unterschiedlicher Ausgangsformen bei den ersten und zweiten Isolationselementen mit der ersten und zweiten Isolationssicht mit einem dritten Isolationselement umfassend eine dritte Isolationsschicht. Beim Tragen der Bekleidung werden die zweiten Isolationselemente derart verformt, dass sie ihre zunächst dreidimensionale hohe Form hinzu einer flacheren Form verändern und somit etwaige Nähte überragen und so etwaige Nähte oder Zwischenräume, durch welche Wärme entweichen könnte, zumindest teilweise abdichten. Dazuhin erzeugt das dritte Isolationselement eine Steigerung des thermischen Widerstands, indem das dritte Isolationselement eine etwaige Naht zwischen dem ersten Isolationselement und dem zweiten Isolationselement vorzugsweise komplett aber zumindest teilweise überdeckt.

Bevorzugt sind zumindest ein erstes Isolationselement und zumindest ein zweites Isolationselement an einer entsprechenden Naht verbunden und die vergrößerte Kontaktfläche liegt der Naht benachbart, sodass das zumindest eine zweite Isolationselement die Naht im Wesentlichen überlappt, wenn das Bekleidungsstück getragen wird und das dritte Isolationselement die Naht zwischen dem ersten Isolationselement und dem zweiten Isolationselement zusätzlich überdeckt.

Vorzugsweise sind alle ersten und zweiten Isolationselemente durch entsprechende Nähte verbunden und es gibt vergrößerte Kontaktflächen benachbart zu allen solchen Nähten, sodass die zweiten Isolationselemente alle Nähte im Wesentlichen überlappen und dritte Isolationselemente die Naht zwischen den ersten Isolationselementen und den zweiten Isolationselementen zusätzlich überdecken und damit den thermischen Widerstand steigern, wenn das Bekleidungsstück getragen wird.

Generell gilt, wenn in dieser Beschreibung im Falle einer Mehrzahl von ersten, zweiten und dritten Isolationselementen von "zumindest einem ersten Isolationselement", "zumindest einem zweiten Isolationselement", "zumindest einem dritten Isolationselement" gesprochen wird, dass dies bevorzugt alle ersten, zweiten und dritten Isolationselemente bedeutet. Es ist jedoch auch möglich, dass es ein oder mehrere, jedoch nicht alle der ersten und/oder zweiten und/oder dritten Isolationselemente bedeutet.

Um solch eine erfindungsgemäße Wärmeisolationsstruktur herzustellen, können Materialschichten so miteinander verbunden werden, dass Hohlräume zwischen den Schichten geformt werden. Nähte können benutzt werden, um die Gewebeschichten, welche das Bekleidungsstück ausmachen, miteinander zu verbinden. Eine Wärmeisolationsstruktur kann aus zwei oder mehr diskreten Isolationselementen konstruiert werden, welche durch Materialschichten definiert werden.

Das erfindungsgemäßes Bekleidungsstück weist ein erstes Isolationselement mit einer ersten innere Stofflage und einer ersten äußeren Stofflage auf, wobei die erste Isolationsschicht zwischen der ersten inneren Stofflage und der ersten äußeren Stofflage angeordnet ist, und fernerhin umfasst das zweite Isolationselement eine zweite innere Stofflage und eine zweite äußere Stofflage, wobei die zweite Isolationsschicht zwischen der zweiten inneren Stofflage und der zweiten äußeren Stofflage angeordnet ist, und das dritte Isolationselement eine dritte innere Stofflage und eine dritte äußere Stofflage, wobei die dritte Isolationsschicht zwischen der dritten inneren Stofflage und der dritten äußeren Stofflage angeordnet ist.

Vorzugsweise sind dabei die erste äußere Stofflage, die zweite äußere Stofflage und die dritte innere Stofflage derart miteinander verbunden, dass das dritte Isolationselement eine am weitesten außen angeordnete Isolationsschicht der Wärmeisolationsstruktur des erfindungsgemäßen Bekleidungsstücks darstellt, wenn das Bekleidungsstück getragen wird.

Bevorzugt weisen zumindest ein erstes Isolationselement und/oder zumindest ein zweites Isolationselement und/oder ein drittes Isolationselement ein Füllmaterial auf. Insbesondere können alle ersten und zweiten Isolationselemente ein Füllmaterial aufweisen.

Das Füllmaterial kann die Wärmeisolation der Wärmeisolationsstruktur erheblich vergrößern. Natürliche Fasern oder Federn, insbesondere Daunen, oder synthetische Fasern, welche im Gegensatz zu Daunen beispielsweise auch im feuchten Zustand noch gute Isolationseigenschaften aufweisen, sind hierbei als Füllmaterial denkbar. In trockenem Zustand hingegen weisen Daunen sehr gute Wärmeisolationseigenschaften bei gleichzeitig niedrigem Gewicht auf. Luft, Gele, Schaumstoffe, Flüssigkeiten, Gase oder Feststoffe wie Granulate sind als Füllmaterial ebenfalls denkbar. Evakuierte Hohlräume, um Wärmekonvektion zu verringern, sind ebenfalls denkbar.

Die erste Isolationsschicht und/oder die zweite Isolationsschicht und/oder die dritte Isolationsschicht kann insbesondere aus künstlichen Daunen oder aus einem Vliesstoff bestehen.

Um einen besonderen Isolationsgrad einer Isolationsschicht zu generieren ist es stets erklärtes Ziel, durch den Einsatz vielzähliger unterschiedlicher Isolationsmaterialien sich mehrere physikalische Effekte technisch nutzbar zu machen. Ein thermodynamisches Phänomen, welches sich durch den Einsatz entsprechenden technischen Aufwands nutzbar machen lässt, ist die Wärmeleitung oder thermische Diffusion.

Als thermischer Widerstand zum Hemmen einer Wärmeleitung eignet sich Luft besonders mit einer Wärmeleitfähigkeit von lediglich 0,0262 $\frac{W}{mK}$ gegenüber gängigen Materialien in der Textiltechnik, wie Baumwolle, Polyester oder Polyamid, welche eine um eine Zehnerpotenz höhere Wärmeleitfähigkeit aufweisen. Wärmeenergieverluste an Kältebrücken, wie Nähten oder anderen Verbindungsstellen, an welchen keine Isolationsschicht angeordnet ist, welche wiederum Luft als thermischen Widerstand einschließt, können mit technischen Lösungen, wie in DE102014200824 A1 offenbart, verringert werden. Um das Isoliervermögen für höhergehende Ansprüche an eine Wärmeisolationsstruktur weiter zu steigern, können wiederum die beiden obenstehenden physikalischen Effekte abermals angewandt werden. Die Steigerung des thermischen Widerstands des erfindungsgemäßen Bekleidungsstück mit Wärmeisolationsstruktur zur Überwindung der Aufgabe der Minimierung von Verlusten der Körperwärme innerhalb des Volumens, welches durch die dritte äußere Schicht beim Tragen des Bekleidungsstücks zur Umwelt hin abgegrenzt wird, wird erfindungsgemäß realisiert indem das erste, das zweite und das dritte Isolationselement einen Hohlraum zwischen sich begrenzen und dieser Hohlraum mit einem wärmespeichernden Medium gefüllt ist, wobei das wärmespeichernde Medium vorzugsweise Luft ist, welche wie bereits weiter oben ausgeführt als besonders guter Isolator aus dem Stand der Technik bekannt ist und durch die niedrige Wärmeleitfähigkeit einen hohen thermischen Widerstand darstellt, den es für die entweichende Wärmemenge beim Verlassen des durch die dritte äußere Schicht zur Umwelt hin abgegrenzten Volumens zu überwinden gilt.

Bevorzugt kann der Hohlraum, welchen das erste, das zweite und das dritte Isolationselement zwischen sich begrenzen aber auch mit anderen wärmespeichernden Medien gefüllt sein, wie beispielsweise Daunen oder einem nicht gewebten Material, welches sein kann, aber nicht begrenzt ist auf ein Meltblown-Vlies, ein Spunlaid-Vlies, ein Stapelvlies oder ein Flashspun-Vlies aus Polyester oder Zellulosematerial.

Eine Möglichkeit der verbesserten Regulierung der gespeicherten Wärmemenge innerhalb des Volumens, welches durch die dritte äußere Schicht beim Tragen des Bekleidungsstücks zur Umwelt hin abgegrenzt wird, ist die optionale Ausstattung der jeweiligen nicht gewebten Materialien mit Phasenwechselmaterialien, um das Temperaturmanagement durch Aufnahme und Speicherung überschüssiger Wärmemengen und Abgabe von gespeicherter Wärmemenge zu unterstützen, falls die vorherrschenden Umweltbedingungen dies notwendig machen, wie z.B. beim Betreten eines beheizten Raumes und/oder dem Verlassen eines beheizten Raumes in eine relativ dazu kältere Umwelt. Bevorzugt können dabei die Phasenwechselmaterialien innerhalb von Einschlussstrukturen dispergiert werden und vor Abrasion geschützt werden, um somit ein Austreten eines Phasenwechselmaterials zu verhindern.

Wie bereits erwähnt erfolgt die Steigerung des thermischen Widerstands dadurch, dass etwaige Nähte oder Zwischenräume zwischen den ersten und zweiten Elementen der Wärmeisolationsstruktur zumindest teilweise abgedichtet werden. Fernerhin kann das dritte Isolationselement, welches die Nähte zwischen den ersten und zweiten Isolationselementen überdeckt auch dazu dienen, zu verhindern, dass Feuchtigkeit, etwa Nebel oder Regen, den Körper des Trägers/Benutzers erreicht. Das Fernhalten von Feuchtigkeit vom Träger des erfindungsgemäßen Bekleidungsstücks kann durch die zumindest wasserfeste Ausgestaltung der dritten äußeren Stofflage des dritten Isolationselements unterstützt werden. Darüber hinaus kann die dritte äußere Stofflage zusätzliche Funktionalitäten aufweisen, wie beispielsweise jedoch nicht beschränkt auf, Wasserbeständigkeit, Wasserdichtigkeit, Feuerbeständigkeit, Atmungsaktivität, Winddichtigkeit, Reißfestigkeit und Elastizität. Die zusätzliche Funktionalität kann hierbei vorzugsweise durch den Einsatz von Membranmaterialien als dritte äußere Stofflage erreicht werden.

In einigen Ausführungsformen können die etwaigen Nähte zwischen den jeweils ersten, zweiten und dritten Isolationselementen derart ausgestaltet sein, dass sie Bewegungen der Isolationsschichten in dem Bekleidungsstück verringern und/oder unterbinden, wobei die erste, zweite und/oder dritte Isolationsschicht in mehrere Teile aufgeteilt ist, die in Kammern angeordnet sind, die durch die innere Stofflage und die äußere Stofflage des Isolationselements gebildet werden. Diese Ausführungsform der Konstruktion der Wärmeisolationsstruktur des erfindungsgemäßen Bekleidungsstücks mit der Vielzahl von ersten, zweiten und dritten Isolationselementen bietet darüber hinaus eine gesteigerte mechanische Stabilität im Vergleich zu einer Konstruktion mit je nur einem ersten, zweiten und/oder dritten Isolationselement.

In einer möglichen Ausführungsform verlaufen die Kammern der ersten und/oder zweiten Isolationselementen in horizontaler Richtung und die Kammern der dritten Isolationselemente in vertikaler Richtung, wenn das Bekleidungsstück getragen wird.

Die Nähte zwischen den ersten, zweiten und dritten Isolationselementen der Wärmeisolationsstruktur des erfindungsgemäßen Bekleidungsstücks können in einer möglichen Ausführungsform derart ausgestaltet sein, dass die erste äußere Stofflage des ersten Isolationselements und die zweite äußere Stofflage des zweiten Isolationselements und die dritte innere Stofflage des dritten Isolationselements miteinander verbunden sind.

Der generell verwendete Begriff "Nähte" beschränkt sich nicht auf Nähte lediglich im textiltechnischen Sinne, sondern ist zugänglich für die Verwendung anderer Fügeverfahren, wie beispielsweise unterschiedliche Schweißverfahren, wie das Ultraschall-schweißen, Infrarot- oder Reibschweißen oder Klebeverfahren.

Eine optionale Ausführungsform des erfindungsgemäßen Bekleidungsstückes umfassend ein Innenteil, welches das erste Isolationselement und das zweite Isolationselement aufweist, ein Außenteil, welches das dritte Isolationselement aufweist, schließt als thermischen Widerstand Luft zwischen dem Innenteil und dem Außenteil ein, wobei das Innenteil und das Außenteil durch Verbindungselemente miteinander verbunden sind. Dabei wird Luft in dem Hohlraum eingeschlossen, der zwischen dem ersten Isolationselement und dem zweiten Isolationselement des Innenteils sowie dem dritten Isolationselement des Außenteils gebildet beziehungsweise begrenzt wird.

Die Verbindungselemente, welche das Innenteil und das Außenteil des erfindungsgemäßen Bekleidungsstücks verbinden, können kann lösbar ausgestaltet sein, z.B. durch Druckknöpfe, Reißverschluss oder Klettverschluss (z.B. unter dem Markennamen Velcro® erhältlich).

Die Verbindungselemente zwischen dem Innenteil und dem Außenteil des erfindungsgemäßen Bekleidungsstücks können in einer möglichen Ausführungsform bevorzugt ausschließlich an der Schulterpartie und der Hüftpartie des Bekleidungsstücks angeordnet sein.

In der folgenden detaillierten Beschreibung werden gegenwärtig bevorzugte Ausführungsbeispiele und Ausführungsformen der Erfindung unter Bezugnahme auf die folgenden Figuren beschrieben. Hierbei zeigt

>Figur 1 eine Ausführungsform eines erfindungsgemäßen Bekleidungsstücks als Jacke,
>Figur 2 eine Ausführungsform eines erfindungsgemäßen Bekleidungsstücks als Weste,
>Figur 3 eine Ausführungsform eines erfindungsgemäßen Bekleidungsstücks als Hose,
>Figur 4 eine Wärmeisolationsstruktur eines erfindungsgemäßen Bekleidungsstücks nach Figur 1, 2 oder 3 im Querschnitt und
>Figur 5 eine Kokon-Struktur eines erfindungsgemäßen Bekleidungsstücks mit Innenteil und Außenteil.

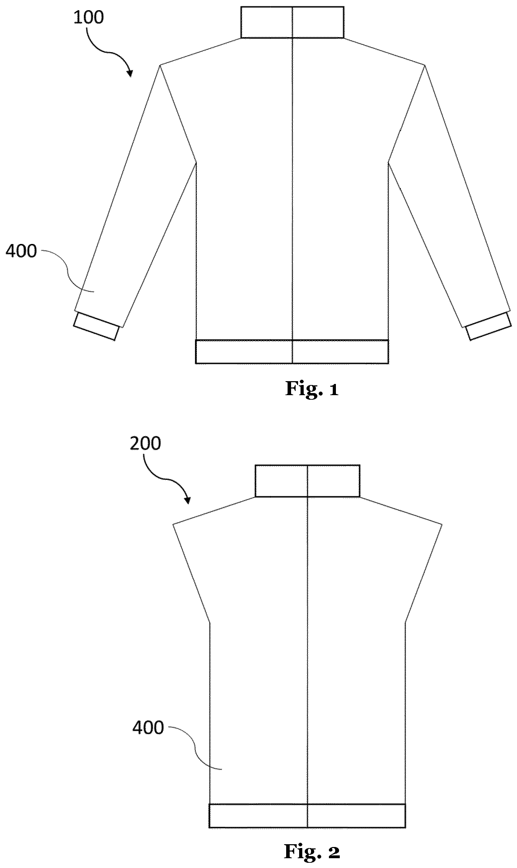

Figur 1 zeigt eine Ausführungsform des erfindungsgemäßen Bekleidungsstücks als Jacke 100. Dabei kann die Ausführungsform der Jacke 100 auch als Mantel gestaltet sein, indem die Länge des Rücken- und Brustteils entsprechend länger ausgeführt werden.

Eine Jacke 100 oder Mantel weisen jeweils eine erfindungsgemäße Wärmeisolationsstruktur 400 in den einzelnen Bestandteilen auf, wie beispielsweise im Rücken- und Brustteil sowie in den Ärmeln.

Figur 2 zeigt eine Ausführungsform des erfindungsgemäßen Bekleidungsstücks als Weste 200. Dabei kann die Ärmellänge einer solchen Ausführungsform des erfindungsgemäßen Bekleidungsstücks als Weste 200 variieren, von einer Ärmellänge beispielsweise bis zum Ellbogen eines Trägers, wenn das erfindungsgemäße Bekleidungsstück als Weste 200 getragen wird oder beispielsweise lediglich bis zur Schulter eines Trägers wenn das erfindungsgemäße Bekleidungsstücks als Weste 200 getragen wird. Eine Weste 200 weist dabei eine erfindungsgemäße Wärmeisolationsstruktur 400 in den einzelnen Bestandteilen auf, wie beispielsweise im Rücken- und Brustteil sowie in den Ärmeln - sofern in der Ausführungsform vorhanden.

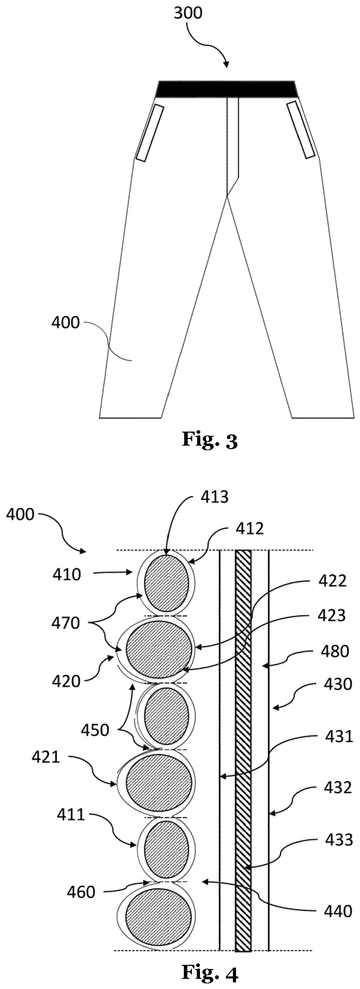

Figur 3 zeigt eine Ausführungsform des erfindungsgemäßen Bekleidungsstücks als Hose 300. Dabei kann die Beinlänge einer solchen Ausführungsform des erfindungsgemäßen Bekleidungsstücks als Hose 300 variieren, von einer Beinlänge beispielsweise bis zum Knie eines Trägers, wenn das erfindungsgemäße Bekleidungsstück als Hose 300 getragen wird oder beispielsweise bis zum Rist eines Trägers wenn das erfindungsgemäße Bekleidungsstücks als Hose 300 getragen wird. Eine Hose 300 weist dabei eine erfindungsgemäße Wärmeisolationsstruktur 400 in den einzelnen Bestandteilen auf, wie beispielsweise im vorderen und hinteren Beinteil, im Gesäß und im Schritt.

Die Figur 4 zeigt ein Ausführungsbeispiel einer erfindungsgemäßen Wärmeisolationsstruktur 400. Die Wärmeisolationsstruktur 400 kann beispielsweise in Bekleidung Anwendung finden. Die Wärmeisolationsstruktur 400 weist ein erstes Isolationselement 410 und ein zweites Isolationselement 420 und ein drittes Isolationselement 430 auf. Das zweite Isolationselement 420 weist eine andere Ausgangsform auf als das erste Isolationselement 410, und das erste Isolationselement 410, das zweite Isolationselement 420 und das dritte Isolationselement sind miteinander verbunden. Wenn ein Bekleidungsstück mit der Wärmeisolationsstruktur 400 getragen wird, zeigt das dritte Isolationselement 430 nach außen und das zweite Isolationselement 420 wird durch einen Druck auf eine Innenseite der Wärmeisolationsstruktur 400 verformt, sodass Kontaktflächen 450, in welchen die ersten Isolationselemente 410 die zweiten Isolationselemente 420 berühren, vergrößert werden und das dritte Isolationselement 430 bildet im Verbund zusammen mit dem ersten Isolationselement 410 und dem zweiten Isolationselement 420 einen Hohlraum 440, in welchem ein erstes Wärmespeichermedium (z.B. Luft) eingeschlossen wird.

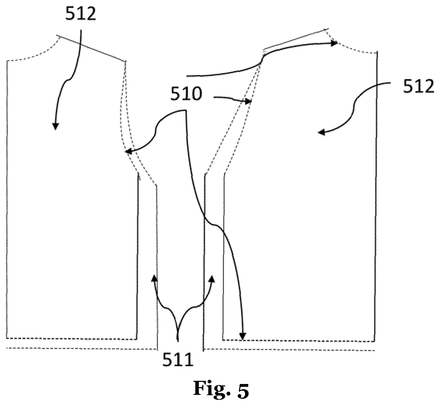

Figur 5 zeigt die Kokon-Struktur des erfindungsgemäßen Bekleidungsstücks 100, 200, 300 mit den Verbindungselementen 510 zwischen dem Innenteil 511 des erfindungsgemäßen Bekleidungsstücks 100, 200, 300 und dem Außenteil 512 des erfindungsgemäßen Bekleidungsstücks 100, 200, 300.

In dem in Figur 4 gezeigten Ausführungsbeispiel weist die Wärmeisolationsstruktur 400 eine Mehrzahl von ersten Isolationselementen 410 und eine Mehrzahl von zweiten Isolationselementen 420 auf. Die zweiten Isolationselemente 420 weisen jeweils eine andere Ausgangsform auf als die ersten Isolationselemente 410. Jedes erste Isolationselement 410 ist mit zumindest einem zweiten Isolationselement 420 verbunden. Wenn ein Bekleidungsstück mit Wärmeisolationsstruktur 400 getragen wird, werden die zweiten Isolationselemente 420 durch einen Druck auf die Innenseite der Wärmeisolationsstruktur 400 verformt, sodass Kontaktflächen 450, in welchen die ersten Isolationselemente 410 die zweiten Isolationselemente 420 berühren, vergrößert werden. In dem hier gezeigten vorteilhaften Fall gibt es zwischen allen Isolationselementen 410, 420 der Wärmeisolationsstruktur 400 vergrößerte Kontaktflächen 450 wenn Druck ausgeübt wird, sodass Verbindungen 460, z. B. Nähte 460, durch die vergrößerten Kontaktflächen 450 abgedichtet werden. Es ist jedoch auch möglich, dass Kontaktflächen nur zwischen einigen der ersten und zweiten Isolationselemente 410, 420 vergrößert werden.

Die vergrößerten Kontaktflächen 450, in denen die ersten Isolationselemente 410 die zweiten Isolationselemente 420 berühren, können insbesondere ein Entweichen von Körperwärme verringern, wenn ein Kleidungsstück mit Wärmeisolationsstruktur 400 getragen wird. Das dritte Isolationselement 430 selbst und der entstehende Hohlraum 440 zwischen ersten Isolationselementen 420, zweiten Isolationselementen 420 und den dritten Isolationselementen 430 erhöhen den thermischen Widerstand der Wärmeisolationsstruktur 400. Die Isolationselemente 410, 420, 430 können beispielsweise durch Stofflagen 411, 412, 421, 422, 431, 432 gebildet werden, welche an Nähten 460 oder Verbindungselementen 510 verbunden sind und Hohlräume 440 und 470 zwischen diesen formen.

Die Stofflagen 411, 412, 421, 422, 431, 432 können aus einem einzigen Material konstruiert werden oder in einigen Ausführungsformen aus mehreren Materialien. Nützliche Materialien für die Konstruktion solcher Stofflagen 411, 412, 421, 422, 431, 432 beinhalten, sind aber nicht begrenzt auf, Daunen-feste Materialien wie Micro-Lightweights, leichtgewichtige Stoffe, ultraleichte Gewebe, leichtgewichtige Gewebe, atmungsaktive Gewebe, Polyester wie gewebter Polyester und gebürsteter Polyester, Nylon, Tuch, Baumwolle, Wolle, Fleece, Seide, Flanell, eng gewirkte oder gewebte Gewebe oder Kombinationen daraus.

Weiterhin können die Stofflagen 411, 412, 421, 422, 431, 432 zum Beispiel mit einem Daunen-Abdichtungsmittel oder chemischen Mitteln wie einem dauerhaften wasserabweisenden Mittel (durable water repellant) oder der Gleichen behandelt werden. Ferner können die Stofflagen 411, 412, 421, 422, 431, 432 zum Beispiel auch atmungsaktiv und/oder winddicht ausgeführt sein. Dazuhin können die Hohlräume 470, 480 der ersten, zweiten und dritten Isolationselemente 410, 420, 430 mit jeweils einer ersten Isolationsschicht 413, einer zweiten Isolationsschicht 423 und einer dritten Isolationsschicht 433 gefüllt sein, welche in manchen Ausführungsformen jeweils für die ersten, zweiten und dritten Isolationselemente 410, 420, 430 aus dem gleichen Material besteht. In weiteren Ausführungsformen können die ersten, zweiten und dritten Isolationsschichten 413, 423, 433 auch aus unterschiedlichen Materialien bestehen. Die Isolationsschichten 412, 423, 433 können bestehen aus, sind dabei jedoch nicht beschränkt auf Luft, Gele, Schaumstoffe, Flüssigkeiten, Gase oder Feststoffe wie Granulate sind als Füllmaterial ebenfalls denkbar. Evakuierte Hohlräume, um Wärmekonvektion zu verringern, sind ebenfalls denkbar.

Wie bereits erwähnt begrenzen das erste, zweite und das dritte Isolationselement einen Hohlraum 440 zwischen sich und dieser ist Hohlraum mit einem wärmespeichernden Medium gefüllt, wobei das wärmespeichernde Medium vorzugsweise Luft ist. Bevorzugt kann der Hohlraum 440 welchen das erste, das zweite und das dritte Isolationselement zwischen sich begrenzen aber auch mit anderen wärmespeichernden Medien gefüllt sein, wie beispielsweise Daunen oder einem nicht gewebten Material, welches sein kann, aber nicht begrenzt ist auf ein Meltblown-Vlies, ein Spunlaid-Vlies, ein Stapelvlies oder ein Flashspun-Vlies aus Polyester oder Zellulosematerial, welches zusätzlich optional aufweisend ein Phasenwechselmaterial, um das Temperaturmanagement durch Aufnahme und Speicherung überschüssiger Wärmemengen und Abgabe von gespeicherter Wärmemenge zu unterstützen.

Bevorzugt sind die ersten und zweiten Isolationselemente 410, 420 miteinander durch eine entsprechende Naht 460 verbunden. Bevorzugt liegen die vergrößerten Kontaktflächen 450, welche durch den Druck auf die Innenseite der Wärmeisolationsstruktur 400 beim Tragen eines Bekleidungsstücks mit derselben erzeugt werden, benachbart zu den Nähten 460, sodass die zweiten Isolationselemente 420 die Nähte 450 im Wesentlichen überlappen oder abdecken, wenn das Bekleidungsstück getragen wird.

Die Nähte 460 zwischen den ersten und zweiten Isolationselementen 410, 420 werden vorzugsweise zusätzlich zu den vergrößerten Kontaktflächen 450, welche durch den Druck auf die Innenseite der Wärmeisolationsstruktur 400 beim Tragen eines Bekleidungsstücks mit derselben erzeugt werden, benachbart zu den Nähten 460, sodass die zweiten Isolationselemente 420 die Nähte 450 im Wesentlichen überlappen oder abdecken, wenn das Bekleidungsstück getragen wird, durch das dritte Isolationselement 430 überdeckt, um einen Wärmeverluste durch die Nähte 460 hindurch weiter zu verringern.

Die Nähte 460 können beispielsweise Steppnähte sein. Die Nähte 460 können auch durch eine andere bekannte Konstruktionsmethoden ausgebildet werden, beinhaltend aber nicht beschränkt auf chemisches Verbinden, mechanisches Verbinden, thermisches Verbinden, Klebstoffe, Verbindungsband, verschmelzbare Fäden und/oder Materialien, Schweißen wie zum Beispiel Ultraschall-Schweißen, Radiofrequenz-Schweißen, etc., Absteppen mit zum Beispiel Languettenstich, Kettenstich, Kreuzstich, Zierstich, Krausgestrick, Steppstich, Stickstich, Zigzag-Stich, Stretch-Stich, Überwendlingstich, Coverstitch, Topstitch, etc., Nieten, Wärmebehandlung oder Kombinationen hieraus. Des Weiteren können die Nähte oder Teile der Nähte ein Siegel beinhalten, welches es Hitze, Luft, Flüssigkeit, Schmutz, etc. erschwert, die Nähte 460 zu durchdringen. Weiterhin sind in einigen Ausführungsformen auch andere Arten von Verbindungen 460 denkbar. Die jeweiligen ersten und zweiten Isolationselemente 410 und 420 können beispielsweise auch über Balken oder andersartig ausgestaltete Verbindungsbereiche miteinander verbunden sein.

Die Verbindungselemente 510 können beispielsweise Steppnähte sein. Die Verbindungselemente 510 können auch durch eine andere bekannte Konstruktionsmethoden ausgebildet werden, beinhaltend aber nicht beschränkt auf chemisches Verbinden, mechanisches Verbinden, thermisches Verbinden, Klebstoffe, Verbindungsband, verschmelzbare Fäden und/oder Materialien, Schweißen wie zum Beispiel Ultraschall-Schweißen, Radiofrequenz-Schweißen, etc., Absteppen mit zum Beispiel Languettenstich, Kettenstich, Kreuzstich, Zierstich, Krausgestrick, Steppstich, Stickstich, Zigzag-Stich, Stretch-Stich, Überwendlingstich, Coverstitch, Topstitch, etc., Nieten, Wärmebehandlung oder Kombinationen hieraus. Des Weiteren können die Nähte oder Teile der Nähte ein Siegel beinhalten, welches es Hitze, Luft, Flüssigkeit, Schmutz, etc. erschwert, die Nähte 510 zu durchdringen, vor allem von der Außenseite her. Weiterhin sind in einigen Ausführungsformen auch andere Arten von Verbindungen 510 denkbar. Die jeweiligen ersten und zweiten Isolationselemente 410 und 420 als Innenteil 511 und die dritten Isolationselemente 430 können beispielsweise auch über Balken oder andersartig ausgestaltete Verbindungsbereiche miteinander verbunden sein. Insbesondere können die Verbindungselemente 510 als lösbare Verbindung ausgeführt sein, wie beispielhaft als Reißverschluss, als Klettverschluss oder mit Druckknöpfen oder als Ösen-, Nieten-, Loch-, Knebelknopf.

Gezeigt sind hier jeweils drei erste und zwei zweite Isolationselemente 410 und 420 und ein drittes Isolationselement 430, denkbar ist jedoch grundsätzlich jede Anzahl an ersten und/oder zweiten Isolationselementen 410, 420 größer zwei und jede Anzahl dritter Isolationelemente 430 größer eins. Es ist auch möglich, dass nur ein erstes Isolationselement 410, ein zweites Isolationselement 420 und ein drittes Isolationselement 430 vorhanden ist. Zur Vereinfachung wird in der folgenden Beschreibung der Ausführungsform 400 jedoch der Plural benutzt. Die ersten Isolationselemente 410 haben eine andere Ausgangsform als die zweiten Isolationselemente 420. Wie in den 4 gezeigt bezieht sich die Ausgangsform der Isolationselemente auf die Form der Isolationselemente 410, 420 in einem unbelasteten Zustand, d. h. in einem Zustand in dem kein Druck - beispielsweise durch einen Träger einer Jacke - auf die Wärmeisolationsstruktur 400 ausgeübt wird.

Ferner ist jeweils ein erstes Isolationselement 410 mit einem zweiten Isolationselement 420 verbunden. Besonders bevorzugt sind dabei die ersten Isolationselemente 410 und die zweiten Isolationselemente 420 abwechselnd untereinander und neben den dritten Isolationselemente 430 angeordnet, wie in 4 gezeigt. Dabei kann es vorteilhaft sein, wenn alle Isolationselemente 410, 420 abwechselnd miteinander und schließlich als Verbund mit den dritten Isolationselementen 430 gefügt sind, z.B. um eine durchgängige Wärmeisolationsstruktur 400 bereitzustellen, wie hier gezeigt.

Die zweiten Isolationselemente 420 können während der Benutzung verformt werden, sodass Kontaktflächen 450, in denen die ersten Isolationselemente 410 die zweiten Isolationselemente 420 berühren, durch Druck auf eine Innenseite der Wärmeisolationsstruktur 400 welcher während des Tragens des Bekleidungsstücks erzeugt wird, vergrößert werden. Die Berührung der ersten und zweiten Isolationselemente 410 und 420 kann dabei direkt erfolgen. Weist die Jacke 100 jedoch beispielsweise eine weitere Innenschicht auf (nicht gezeigt), welche auf der Innenseite der Wärmeisolationsstruktur 400 angeordnet ist, so kann die Berührung der ersten und zweiten Isolationselemente 410 und 420 auch indirekt erfolgen, zum Beispiel durch eine Berührung einer solchen Innenschicht in den jeweiligen Bereichen.

Wie bereits erwähnt sind die Isolationselemente 410, 420 verformbar. Ein gegebenes zweites Isolationselement 420 kann während der Benutzung so verformt werden, dass ein Teil des zweiten Isolationselements 420 eine benachbarte Naht 460 oder einen Teil der Naht 230 abdeckt. Insbesondere können die zweiten Isolationselemente 420 so ausgestaltet sein, dass sie benachbarte Nähte 460 während der Benutzung im Wesentlichen überlappen, sodass der Wärmeverlust an den Nähten 460 reduziert wird. Wenn ein Benutzer beispielsweise ein Bekleidungsstück mit zweiten Isolationselementen 420 trägt, so kann ein Körper oder Teile des Körpers des Benutzers eine Kraft auf die zweiten Isolationselemente 420 ausüben, sodass diese gegen die Nähte 460 und/oder die ersten Isolationselemente 410 gedrückt werden. Dies kann dazu führen, dass die zweiten Isolationselemente 420 die benachbarten Nähte 460 mit beiden Schichten 413, 423 und dem Füllmaterial überlappen.

Wie bereits erwähnt ist das Isolationselement 430 neben den Isolationselementen 410, 420 angeordnet. Wird das erfindungsgemäße Bekleidungsstück 100, 200, 300 mit einer Wärmeisolationsstruktur getragen, zeigt das Isolationselement 430 insgesamt nach außen und die innere Stofflage 431 des Isolationselements 430 zeigt nach innen. Insbesondere ist das dritte Isolationselement derart angeordnet, dass es während des Tragens des erfindungsgemäßen Bekleidungsstücks 100, 200, 300 die Nähte 460 zwischen den ersten und zweiten Isolationselementen 410, 420 überdeckt, was zur Folge haben kann, dass die benachbarten Nähte 460 von der Isolationsschicht 433 des dritten Isolationselements 430 überdeckt werden, was den thermischen Widerstand erhöht und sonach den Wärmeverlust reduziert.

In einigen Ausführungsformen können die etwaigen Nähte zwischen den dritten Isolationselementen 430 derart ausgestaltet sein, dass sie Bewegungen der Isolationsschicht in dem Bekleidungsstück verringern und/oder unterbinden, wobei die dritte Isolationsschicht 433 in mehrere Teile aufgeteilt ist, die in Kammern angeordnet sind, die durch die innere Stofflage 431 und die äußere Stofflage 432 des Isolationselements 430 gebildet werden. Diese Ausführungsform der Konstruktion der Wärmeisolationsstruktur 400 des erfindungsgemäßen Bekleidungsstücks 100, 200, 300 mit der Vielzahl von dritten Isolationselementen 430 bietet darüber hinaus eine gesteigerte mechanische Stabilität im Vergleich zu einer Konstruktion mit lediglich einem dritten Isolationselement 430. In einigen Ausführungsformen können die dritten Isolationselemente 430 spezielle Formen aufweisen, wie beispielsweise T-Form, Pfeilform, Trapezform, Dreiecksform, Parallelogrammform oder Rechteckform.

**Patentansprüche**

**1.** Bekleidungsstück (100, 200, 300) mit einer Wärmeisolationsstruktur (400), die Wärmeisolationsstruktur (400) umfassend

- ein erstes Isolationselement (410) mit einer ersten Isolationsschicht (413); und
- ein zweites Isolationselement (420) mit einer zweiten Isolationsschicht (423),

wobei

- das zweite Isolationselement (420) eine andere Ausgangsform aufweist als das erste Isolationselement (410);
- das erste Isolationselement (410) mit dem zweiten Isolationselement (420) verbunden ist,
- das zweite Isolationselement (420) beim Tragen des Bekleidungsstücks (100, 200, 300) durch einen Druck auf eine Innenseite der Wärmeisolationsstruktur (400) verformt wird, so dass eine Kontaktfläche (450), in der das erste Isolationselement (410) das zweite Isolationselement (420) berührt, vergrößert wird;

**dadurch gekennzeichnet, dass**

- die Wärmeisolationsstruktur (400) weiterhin ein drittes (430) Isolationselement mit einer dritten Isolationsschicht (433) umfasst,
- das erste Isolationselement (410) und das zweite (420) Isolationselement untereinander angeordnet sind, wenn das Bekleidungsstück (100, 200, 300) getragen wird,
- das dritte Isolationselement (430) neben dem ersten (410) und dem zweiten (420) Isolationselement angeordnet ist, wenn das Bekleidungsstück (100, 200, 300) getragen wird,
- das erste Isolationselement (410) eine erste innere Stofflage (411) und eine erste äußere Stofflage (412) umfasst, wobei die erste Isolationsschicht (413) zwischen der ersten inneren Stofflage (411) und der ersten äußeren Stofflage (412) angeordnet ist,
- das zweite Isolationselement (420) eine zweite innere Stofflage (421) und eine zweite äußere Stofflage (422) umfasst, wobei die zweite Isolationsschicht (423) zwischen der zweiten inneren Stofflage (421) und der zweiten äußeren Stofflage (422) angeordnet ist, und
- das dritte Isolationselement (430) eine dritte innere Stofflage (431) und eine dritte äußere Stofflage (432) umfasst, wobei die dritte Isolationsschicht (433) zwischen der dritten inneren Stofflage (431) und der dritten äußeren Stofflage (432) angeordnet ist.

**2.** Bekleidungsstück (100, 200, 300) nach Anspruch 1, wobei

- das erste Isolationselement (410) und das zweite Isolationselement (420) durch eine Naht (460) miteinander verbunden sind, und
- das dritte Isolationselement (430) die Naht (460) zwischen dem ersten Isolationselement (410) und dem zweiten Isolationselement (420) überdeckt.

**3.** Bekleidungsstück (100, 200, 300) nach irgendeinem der vorhergehenden Ansprüche, wobei das dritte Isolationselement (430) eine am weitesten außen angeordnete Isolationsschicht der Wärmeisolationsstruktur (400) darstellt, wenn das Bekleidungsstück (100, 200, 300) getragen wird.

**4.** Bekleidungsstück (100, 200, 300) nach Anspruch 1, wobei

- das erste (410), das zweite (420) und das dritte Isolationselement (430) einen Hohlraum (440) zwischen sich begrenzen,
- der Hohlraum (440) mit einem wärmespeichernden Medium gefüllt ist, und
- das wärmespeichernde Medium Luft, Daunen oder einen Vliesstoff umfasst.

**5.** Bekleidungsstück (100, 200, 300) nach Anspruch 1, wobei die erste Isolationsschicht (413) und/oder die zweite Isolationsschicht (423) und/oder die dritte Isolationsschicht (433) aus echten Daunen, künstlichen Daunen oder aus einem Vliesstoff besteht.

6. Bekleidungsstück (100, 200, 300) nach Anspruch 1, wobei die dritte Isolationsschicht (433) des dritten Isolationselements (430) ein nicht gewebtes Material ist.

7. Bekleidungsstück (100, 200, 300) nach einem der vorhergehenden Ansprüche, wobei die dritte äußere Stofflage (432) des dritten Isolationselements (430) wasserdicht ist.

8. Bekleidungsstück (100, 200, 300) nach Anspruch 1, wobei die dritte Isolationsschicht (433) in mehrere Teile aufgeteilt ist, wobei die Teile der Isolationsschicht in Kammern angeordnet sind, wobei die Kammern durch die dritte innere Stofflage (431) und die dritte äußere Stofflage (432) des dritten Isolationselements (430) gebildet werden.

9. Bekleidungsstück (100, 200, 300) nach Anspruch 8, wobei die Kammern in einer vertikalen Richtung verlaufen, wenn das Bekleidungsstück getragen wird.

10. Bekleidungsstück (100, 200, 300) nach einem der vorhergehenden Ansprüche, wobei die erste äußere Stofflage (412) des ersten Isolationselements (410) und die zweite äußere Stofflage (422) des zweiten Isolationselements (420) und die dritte innere Stofflage (431) des dritten Isolationselements (430) miteinander verbunden sind.

11. Bekleidungsstück nach einem der vorstehenden Ansprüche, wobei das Bekleidungsstück eine Jacke (100), eine Weste (200), ein Mantel oder eine Hose (300) ist.

12. Bekleidungsstück (100, 200, 300) nach einem der Ansprüche 4 bis 11, wobei

- das Bekleidungsstück (100, 200, 300) ein Innenteil (511) umfasst, wobei das Innenteil (511) das erste Isolationselement (410) und das zweite Isolationselement (420) aufweist,
- das Bekleidungsstück (100, 200, 300) ein Außenteil (512) umfasst, wobei das Außenteil (512) das dritte Isolationselement (430) aufweist,
- Luft in dem Hohlraum (440) eingeschlossen ist, der zwischen dem ersten Isolationselement (410) und dem zweiten Isolationselement (420) des Innenteils (511) sowie dem dritten Isolationselement (430) des Außenteils (512) gebildet wird, und
- das Innenteil (511) und das Außenteil (512) durch Verbindungselemente (510) miteinander verbunden sind.

13. Bekleidungsstück nach Anspruch 12, wobei das Bekleidungsstück eine Jacke (100), ein Mantel (100) oder eine Weste (200) ist, und wobei die Verbindungselemente (510) ausschließlich an der Schulterpartie und an der Hüftpartie des Bekleidungsstücks (100, 200) angeordnet sind.

**Claims**

1. Garment (100, 200, 300) having a thermal insulation structure (400), the thermal insulation structure (400) comprising

    - a first insulation element (410) having a first insulation layer (413); and
    - a second insulation element (420) having a second insulation layer (423),

    wherein

    - the second insulation element (420) has a different initial shape than the first insulation element (410);
    - the first insulation element (410) is connected to the second insulation element (420),
    - when the garment (100, 200, 300) is worn, the second insulation element (420) is deformed by a pressure on an inner side of the thermal insulation structure (400) such that a contact area (450) in which the first insulation element (410) contacts the second insulation element (420) is enlarged;

    **characterized in that**

    - the thermal insulation structure (400) further comprises a third (430) insulation element having a third insulation layer (433),
    - the first insulation element (410) and the second (420) insulation element are arranged among each other when the garment (100, 200, 300) is worn,
    - the third insulation element (430) is arranged adjacent to the first (410) and the second (420) insulation element when the garment (100, 200, 300) is worn,
    - the first insulation element (410) comprises a first inner fabric layer (411) and a first outer fabric layer (412), wherein the first insulation layer (413) is arranged between the first inner fabric layer (411) and the first outer fabric layer (412),
    - the second insulation element (420) comprises a second inner fabric layer (421) and a second outer fabric layer (422), wherein the second insulation layer (423) is arranged between the second inner fabric layer (421) and the second outer fabric layer (422), and
- the third insulation element (430) comprises a third inner fabric layer (431) and a third outer fabric layer (432), wherein the third insulation layer (433) is arranged between the third inner fabric layer (431) and the third outer fabric layer (432).

2. Garment (100, 200, 300) according to claim 1, wherein

- the first insulation element (410) and the second insulation element (420) are connected to each other by a seam (460), and
- the third insulation element (430) covers the seam (460) between the first insulation element (410) and the second insulation element (420).

3. Garment (100, 200, 300) according to any of the preceding claims, wherein the third insulation element (430) is an outermost insulation layer of the thermal insulation structure (400) when the garment (100, 200, 300) is worn.

4. Garment (100, 200, 300) according to claim 1, wherein

- the first (410), the second (420) and the third insulation element (430) delimit a cavity (440) between them,
- the cavity (440) is filled with a heat storage medium, and
- the heat storage medium comprises air, down or a nonwoven fabric.

5. Garment (100, 200, 300) according to claim 1, wherein the first insulation layer (413) and/or the second insulation layer (423) and/or the third insulation layer (433) is made of real down, artificial down or a nonwoven fabric.

6. Garment (100, 200, 300) according to claim 1, wherein the third insulation layer (433) of the third insulation element (430) is a non-woven material.

7. Garment (100, 200, 300) according to any of the preceding claims, wherein the third outer fabric layer (432) of the third insulation element (430) is waterproof.

8. Garment (100, 200, 300) according to claim 1, wherein the third insulation layer (433) is divided into several parts, wherein the parts of the insulation layer are arranged in chambers, wherein the chambers are formed by the third inner fabric layer (431) and the third outer fabric layer (432) of the third insulation element (430).

9. Garment (100, 200, 300) according to claim 8, wherein the chambers extend in a vertical direction when the garment is worn.

10. Garment (100, 200, 300) according to any of the preceding claims, wherein the first outer fabric layer (412) of the first insulation element (410) and the second outer fabric layer (422) of the second insulation element (420) and the third inner fabric layer (431) of the third insulation element (430) are connected to each other.

11. Garment according to any of the preceding claims, wherein the garment is a jacket (100), a vest (200), a coat or trousers (300).

12. Garment (100, 200, 300) according to any of claims 4 to 11, wherein

- the garment (100, 200, 300) comprises an inner part (511), wherein the inner part (511) comprises the first insulation element (410) and the second insulation element (420),
- the garment (100, 200, 300) comprises an outer part (512), wherein the outer part (512) comprises the third insulation element (430),
- air is enclosed in the cavity (440) formed between the first insulation element (410) and the second insulation element (420) of the inner part (511) and the third insulation element (430) of the outer part (512), and
- the inner part (511) and the outer part (512) are connected to each other by connecting elements (510).

13. Garment according to claim 12, wherein the garment is a jacket (100), a coat (100) or a vest (200), and wherein the connecting elements (510) are arranged exclusively at the shoulder part and at the waist part of the garment (100, 200).

**Revendications**

1. Vêtement (100, 200, 300) avec une structure d'isolation thermique (400), la structure d'isolation thermique (400) comprenant

- un premier élément isolant (410) avec une première couche isolante (413) ; et
- un deuxième élément isolant (420) avec une deuxième couche isolante (423),

dans lequel

- le deuxième élément isolant (420) présente une forme initiale différente du premier élément isolant (410) ;

- le premier élément isolant (410) est relié au deuxième élément isolant (420),
- le deuxième élément isolant (420) est déformé lors du port du vêtement (100, 200, 300) par une pression sur une face intérieure de la structure d'isolation thermique (400) de telle sorte qu'une surface de contact (450), dans laquelle le premier élément isolant (410) entre en contact avec le deuxième élément isolant (420), est agrandie ;

**caractérisé en ce que**

- la structure d'isolation thermique (400) comprend par ailleurs un troisième élément isolant (430) avec une troisième couche isolante (433),
- le premier élément isolant (410) et le deuxième élément isolant (420) sont disposés l'un sous l'autre lorsque le vêtement (100, 200, 300) est porté,
- le troisième élément isolant (430) est disposé à côté du premier (410) et du deuxième (420) élément isolant lorsque le vêtement (100, 200, 300) est porté,
- le premier élément isolant (410) comprend une première couche de tissu intérieure (411) et une première couche de tissu extérieure (412), dans lequel la première couche isolante (413) est disposée entre la première couche de tissu intérieure (411) et la première couche de tissu extérieure (412),
- le deuxième élément isolant (420) comprend une deuxième couche de tissu intérieure (421) et une deuxième couche de tissu extérieure (422), dans lequel la deuxième couche isolante (423) est disposée entre la deuxième couche de tissu intérieure (421) et la deuxième couche de tissu extérieure (422), et
- le troisième élément isolant (430) comprend une troisième couche de tissu intérieure (431) et une troisième couche de tissu extérieure (432), dans lequel la troisième couche isolante (433) est disposée entre la troisième couche de tissu intérieure (431) et la troisième couche de tissu extérieure (432).

2. Vêtement (100, 200, 300) selon la revendication 1, dans lequel

- le premier élément isolant (410) et le deuxième élément isolant (420) sont reliés l'un à l'autre par une couture (460), et
- le troisième élément isolant (430) recouvre la couture (460) entre le premier élément isolant (410) et le deuxième élément isolant (420).

3. Vêtement (100, 200, 300) selon l'une des revendications précédentes, dans lequel le troisième élément isolant (430) représente une couche isolante disposée le plus à l'extérieur de la structure d'isolation thermique (400) lorsque le vêtement (100, 200, 300) est porté.

4. Vêtement (100, 200, 300) selon la revendication 1, dans lequel

- le premier (410), le deuxième (420) et le troisième élément isolant (430) délimitent entre eux une cavité (440),
- la cavité (440) est remplie d'un milieu de stockage de chaleur, et
- le milieu de stockage de chaleur comprend de l'air, du duvet ou un non-tissé.

5. Vêtement (100, 200, 300) selon la revendication 1, dans lequel la première couche isolante (413) et/ou la deuxième couche isolante (423) et/ou la troisième couche isolante (433) sont en duvet véritable, en duvet artificiel ou en un non-tissé.

6. Vêtement (100, 200, 300) selon la revendication 1, dans lequel la troisième couche isolante (433) du troisième élément isolant (430) est un matériau non tissé.

7. Vêtement (100, 200, 300) selon l'une des revendications précédentes, dans lequel la troisième couche de tissu extérieure (432) du troisième élément isolant (430) est étanche à l'eau.

8. Vêtement (100, 200, 300) selon la revendication 1, dans lequel la troisième couche isolante (433) est divisée en plusieurs parties, dans lequel les parties de la couche isolante sont disposées dans des chambres, dans lequel les chambres sont formées par la troisième couche de tissu intérieure (431) et la troisième couche de tissu extérieure (432) du troisième élément isolant (430).

9. Vêtement (100, 200, 300) selon la revendication 8, dans lequel les chambres s'étendent dans une direction verticale lorsque le vêtement est porté.

10. Vêtement (100, 200, 300) selon l'une des revendications précédentes, dans lequel la première couche de tissu extérieure (412) du premier élément isolant (410) et la deuxième couche de tissu extérieure (422) du deuxième élément isolant (420) et la troisième couche de tissu intérieure (431) du troisième élément isolant (430) sont reliées entre elles.

11. Vêtement selon l'une des revendications précédentes, dans lequel le vêtement est une veste (100), un gilet (200), un manteau ou un pantalon (300).

12. Vêtement (100, 200, 300) selon l'une des revendications 4 à 11, dans lequel

- le vêtement (100, 200, 300) comprend une partie intérieure (511), dans lequel la partie intérieure (511) présente le premier élément isolant (410) et le deuxième élément isolant (420),
- le vêtement (100, 200, 300) comprend une partie extérieure (512), dans lequel la partie extérieure (512) présente le troisième élément isolant (430),
- de l'air est emprisonné dans la cavité (440) qui est formée entre le premier élément isolant (410) et le deuxième élément isolant (420) de la partie intérieure (511) ainsi que le troisième élément isolant (430) de la partie extérieure (512), et
- la partie intérieure (511) et la partie extérieure (512) sont reliées l'une à l'autre par des éléments de liaison (510).

13. Vêtement selon la revendication 12, dans lequel le vêtement est une veste (100), un manteau (100) ou un gilet (200), et dans lequel les éléments de liaison (510) sont disposés exclusivement sur la partie d'épaule et sur la partie de hanche du vêtement (100, 200).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014200824 A1

- US 5713079 A